# NEW EUROPEAN PATENT SPECIFICATION

(11) **EP 1 023 359 B2**
(45) Date of publication and mention of the opposition decision: **08.09.2010**
(45) Mention of the grant of the patent: 05.01.2005
(21) Application number: 98951032.6
(22) Date of filing: 09.10.1998
(51) Int. Cl.: C08G 69/26, C08G 69/48, C08G 69/50

(54) **Process for preparing substituted polyamides**
Verfahren zur Herstellung substituierter Polyamide
Procédé pour la préparation de polyamides substitués

(30) Priority: 14.10.1997 US 62101 P
(43) Date of publication of application: 02.08.2000
(73) Proprietor: INVISTA Technologies S.à.r.l., 8001 Zürich (CH)
(72) Inventor: ZHAR, George, Elias, Glen Mill, PA 19342 (US)
(74) Representative: Carpmaels & Ransford
(86) International application number: PCT/US1998/021399
(87) International publication number: WO 1999/019382

(56) References cited:
- EP-A- 0 022 501
- EP-A- 0 381 354
- EP-A- 0 505 031
- GB-A- 1 085 666
- GB-A- 1 090 893
- US-A- 4 578 454
- US-A- 4 894 422
- SUZUKI K ET AL: "HOMOGENEOUS ALKYLATION OF POLY(M-PHENYLENE ISOPHTHALAMIDE)" POLYMER ENGINEERING AND SCIENCE, vol. 36, no. 10, May 1996, pages 1410-1413, XP000637006

## Description

### FIELD OF THE INVENTION

The present invention discloses a method for reacting an aliphatic or an aromatic molecule, on the nitrogen of a primary diamine, to form a secondary amine, then reacting the formed diamine with diacid, additional diamine and/or lactams, to form a polyamide polymer with a controlled amount of substituent groups pendant on a portion of the amide nitrogens. Many of the products produced have improved characteristics such as stain resistance, enhanced cationic dyeing or deep dyeing.

### TECHNICAL BACKGROUND

U.S. Patent No. 5,175,038 relates to a highly bulked continuous filament yarns, comprised of filaments having a denier per filament of 10-25 and a trilobal filament cross section of modification ratio 1.4-4.0. including filament nylon yarns that have a yarn bulk level of at least 35, which can be ply-twisted together to high-twist levels and can be used in carpets at high-twist levels.

U.S. Patent No. 5,155,178 relates to blends of nylon 6,6, nylon 6 or nylon, 6,6/6 copolymer which contain a randomly copolymerized cationic dye modifier, which are formed by melt blending the copolymer with a polyamide to form a block copolymer that is resistant to staining with acid dyes at ambient temperature and pH, but which can be dyed at pH 2-7 and 60-100°C.

U.S. Patent No. 5,223,196 discloses terpolymers and interpolyamides which are either block or random. The patent involves making pigmented nylon fiber with decreased draw tension.

U.S. Patent No. 3,962,159 discloses graft copolymers prepared by condensing a polyamideamine substrate with starch and a condensing reagent.

U.S. Patent No. 3,846,507 discloses a fiber forming polyamide having basic dye receptivity and reduced acid dye receptivity, comprising a melt polymerized compound of the formula: 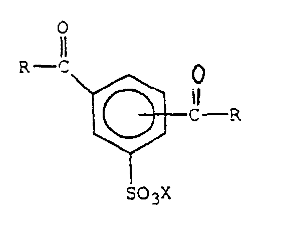 wherein R is OH, Cl, OCH₃ or OC₂H₅ and X is Li, Na, K or NH₄ and wherein the 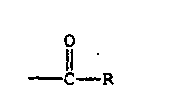 groups are not ortho to each other.

### SUMMARY OF THE INVENTION

The present invention relates to a process comprising reacting an amine reactive modifier with a polyamide-precursor salt to form a diamine and then reacting the formed diamine with diacid, additional diamine and/or lactams, to form a modified polyamide, wherein the amine reactive modifier is selected from
nanofluoro-1-hexene
styrene
styrene sulfonate sodium salt,
methyl vinyl ketone,
vinylphosphonic acid,
vinyl sulfonate sodium salt, and
vinyl pyridine.

### BRIEF DESCRIPTION OF DRAWING

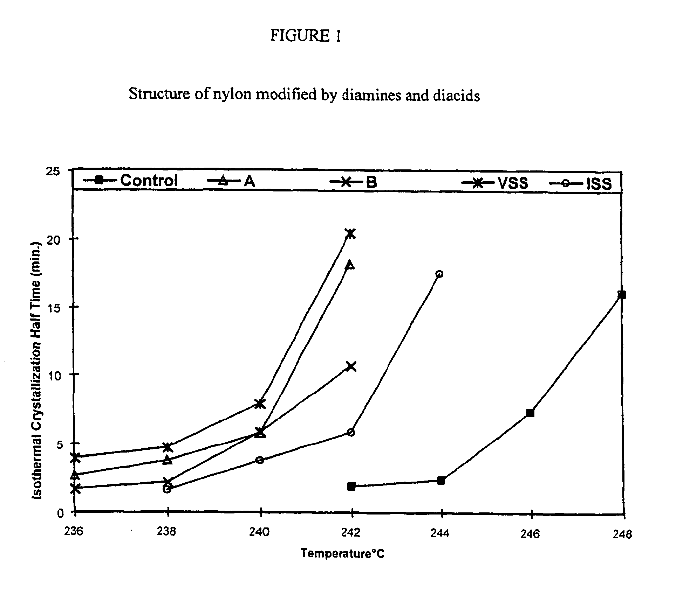

Figure 1 is a graph of the isothermal crystallisation half time over a defined temperature range.

### DETAILED DESRIPTION OF THE INVENTION

The production of aliphatic and aromatic polyamides, particularly nylons including nylon 6, nylon 6,6 and their copolymers, is well known. These polymers contain amine groups, which can be substituted with moieties which can modify the properties, such as dyeability, tensile strength and catalytic activity. See generally U.S. Patent No. 5,422,420, U.S. Patent No. 5,223,196, U.S. Patent No. 3,389,549, which are incorporated herein by reference and see Kirk Othmer Encyclopedia of Chemical Technology, 4th ed., 1996, Vol. 19, pp. 454-518, and Ullmann's Encyclopedia of Industrial Chemistry, 1992, Vol. A21, pp.190-191.

The present invention allows the production of modified aliphatic and aromatic polyamides and other amide-, amine- or carboxylic acid-containing polymers and copolymers, particularly nylons and aramids, including but not limited to nylon 6, nylon 6,6, Kevlar® and Nomex®, in a less expensive way than is currently available. For example, sulfonated and/or acid-dye resistant modifiers may be used. In general, the present improvement can be used with any process useful for making polyamides and other polymers, as described in the background above, including batch and continuous polymerization processes. No equipment modification is generally necessary, as additional ports on evaporators, transfer lines and autoclaves are generally available for addition of process and product property control additives. Additives include, but are not limited to, antifoam agents, antioxidants, delustrants, antistatic agents and branching agents.

Typically, in a nylon 6,6 process, hexamethylenediammonium adipate salt (approximately 52% by weight in water) is added to an evaporator. Various additives may be added at this stage. Under inert atmosphere, this reaction mixture is then heated to a boil (about 160°C) under slight pressure to remove the excess water and thus increase its concentration. A slight pressure is desirable to minimize the loss of volatile materials like hexamethylenediamine. Upon reaching the desired concentration, typically in the range of 70-90% by weight, the reaction mixture is transferred through a transfer line to an autoclave, which is a high pressure reactor. The reaction mixture is maintained under an oxygen-free atmosphere to avoid undesirable side reactions such as oxidative degradation. While in the autoclave, the reaction mixture is heated to a temperature between 175°C and 200°C, while increasing the pressure to about 300 psia to again minimize loss of volatile organic compounds. Oligomers are formed during this stage, which generally takes about an hour. The temperature is then increased to between 250°C and 310°C, and the pressure is released at a slow rate to bleed off steam and thus drive the condensation reaction towards polymerization. While maintaining approximately the same temperature, the reaction mixture is held at a low constant pressure for sufficient time to obtain the desired extent of reaction. The polyamide is then extruded from the reaction vessel and conveniently chopped and dried to produce flake. The relative viscosity (RV) from the autoclave of both nylon 6,6 homopolymer and the inventive material can be in the range of 15 to 80, but is generally between 20 and 55.

The polyamide flake thus produced can be spun at the RV at which it is. produced, or it can be further polymerized to a higher RV by conventional solid phase polymerization processes. Alternatively, the RV can be increased by other means such as by venting off water as the polymer is melted in the extruder prior to spinning.

Additives may be added to the reaction mixture through inlet ports in the evaporator, the transfer line, or the autoclave. Modifiers, such as 5-sulfoisophthalic acid, may be added to the hexamethylene diamine to form a salt which can be added either to the evaporator or the autoclave. This provides the uniformity needed throughout the copolymer feed to produce uniform product. Such modification can be used, for example, to increase dyeability.

One embodiment of this invention is the addition of amine-reactive modifiers, including vinyl and cyclic modifiers, such as vinyl sulfonate sodium salt (VSS), and styrene sulfonate, directly to the polyamide-precursor salt in the autoclave, the evaporator, or the transfer line between the two vessels. The structure of one modifier is shown below.

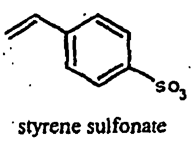

Vinyl pyridine, styrene, methyl vinyl ketone; nanofluoro-1-hexene and vinyl phosphinic acid can also be used as modifiers in this way.

This allow for an *in situ* diamine modification, which in turn allows for the production of modified polyamides, for example. These modifiers are generally added at concentrations of 0.1% to 2.5% by weight, preferably between 0.5% and 3% by weight, essentially all of which is incorporated into the polymeric product. The only essential characteristic of such a modifier is that it reacts with the amine group(s) to form a secondary amine, before the amine group reacts with an acid group to form an amide. Additionally, these materials are generally less expensive than other commonly used modifiers, such as 5-sulfoisophtalic acid or 1,4-bis (3-aminopropy)piperazine.

The addition of sulfonated materials has been shown to have a positive effect on spinning operability, as seen by the reduction in nylon crystallization rate, shown in Figure 1.

The chemistry of this process for the *in situ* diamine modification is shown below and compared with that for modification with functionalized diamine and/or diacid modifiers during polymerization.

The key to this approach is a Michael addition of the amine end of the diamine (hexamethylenediamine) to the double bond of the vinyl monomer 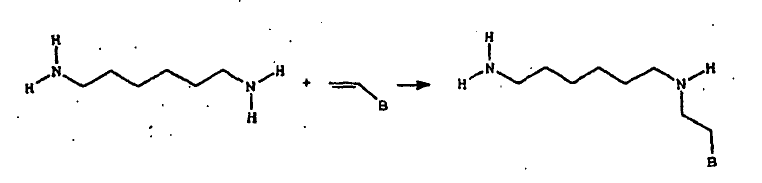 wherein B is an organic group consisting of C, H, S, N, P and salts thereof;
or an activated cyclic compound 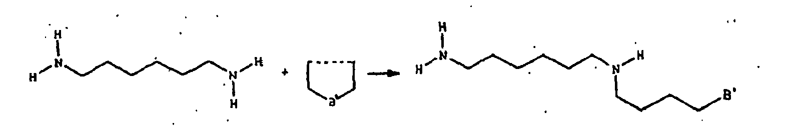 wherein B' is an ester, amide or sulfone.

Selected modifiers for use in the polymerization herein include the following:
nanofluoro-1-hexene,
styrene,
styrene sulfonate sodium salt,
methyl vinyl ketone,
vinylphosphonic acid,
vinyl sulfonate sodium salt.

Shown below is the present polymerization starting with a modified secondary amine that results in a polyamide with a modifier as part of the N-pendant group. The present polymerization can be compared to modification during polymerization wherein the modifiers (R and R') become part of the polymer "backbone" and are not part of the N-pendant group.

The modifications described above can also be done in the presence of other additives which can produce branched polyamides.. Branched polyamides (nylons) may be used to enhance the relative viscosity (RV) of unbranched nylons, for use in high melt viscosity applications like blow molding, and the like. Branched nylon also generally has a higher "end" count, which, in the examples below, can be biased toward a higher amine count, thus giving a deeper dyeing product. Preferred branching agents are polyethylene oxide and ethylene oxide.

### POLYMERIZATION

The modified secondary amine, in turn, reacts with the diacid to produce the modified nylon polymer with an N- pendant group

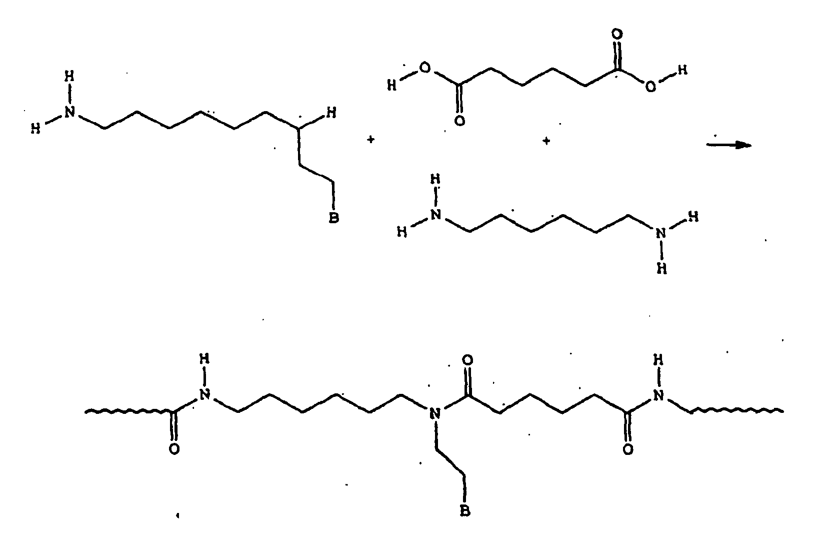

The above process can be compared to modification during polymerization.

### Modification During Polymerization

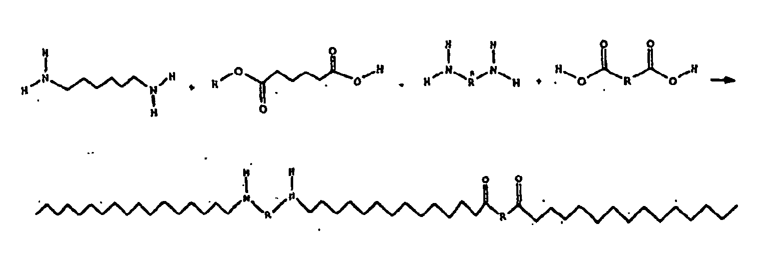

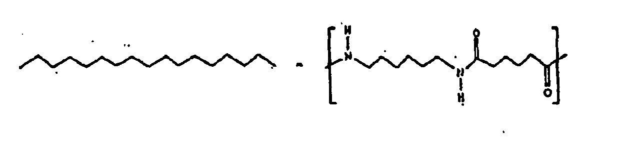

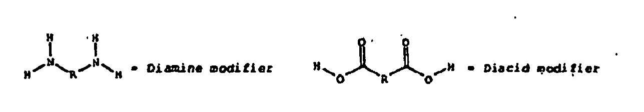

The polyamides of the invention can be spun into fibers using conventional melt-spinning techniques. For instance, the polyamide(s) in flake form is (are) remelted, preferably using a screw melter type extruder. As known to those skilled in the art, other materials including other polyamides and/or pigments, can be added before or during the remelt process. It is not necessary, of course, to use this remelt step if a continuous polymerizer is employed to prepare the polyamides.

Following the formation of the homogeneous melt or melt-blend, the melt is typically pumped through a transfer line to a metering pump. The metering pump controls the volume of polymer delivered to an extrusion pack consisting of filtration media and spinneret plate. After filtration, the polymer melt, typically at a temperature 20°C to 60°C higher than the polymer melting point, is extruded through spinneret orifices into a quench chimney to form filaments that are cooled to a non-tacky state by a cross-flow of gaseous media, usually humidified chilled air of at least 50% relative humidity at 10° to 30°C. The filaments may alternatively be cooled by a radial quench unit.

The cooled filaments are converged, typically at the bottom of a quench drawer. A spin finish is applied to the converged filament bundle by using Roll applicators or metered finish tip applicators. The filaments are pulled through the quench zone and over the finish applicators by a feeder roll.

Conventional processes and equipment may be used for drawing these fibers. These include both cold drawing at room temperature, hot drawing at 60°-180°C, and both single-stage and multi-stage drawing processes. Some of these techniques are described in U.S. Patent No. 4,612,150 (DeHowitt) and U.S. Patent No. 3,311,691 (Good). Also, these modified polyamides can be used in a high speed spinning process without any mechanical draw to obtain high quality feed yams for use in draw texturing and for warp-drawing.

Fibers of this invention can be engineered into essentially any form in which fibers are conventionally made, including, without limitation, filament yarns, staple fibers, monofilament, and strands. The fibers can be textured, bulked or crimped using well-known methods and can be colored using pigments or dyes. End-use applications for the fibers extend to all areas where polyamide fibers have been utilized, including, by way of example, apparel, carpets, rugs, upholstery, and industrial applications (tires, hoses, ropes, paper-making felts, etc.).

It will be appreciated that the inventive materials can also be used in films, engineering polymers and the like. Any end-use where stain resistance to acidic materials, including acid dyes, would benefit from the use of these materials.

### ANALYTICAL TEST METHODS

Relative viscosity (RV) was determined on solutions containing 8.40% by weight of the nylon polymers in 90.0% formic acid, based on ASTM Standard Test Method D789. Amine and carboxyl end groups were determined by methods similar to those described in the Encyclopedia of Industrial Chemical Analysis Vol. 17 John Wiley & Sons, New York 1973, p 293-294, which herein incorporated by reference.

Nuclear Magnetic Resonance (NMR) measurements were performed on 300 Mhz, 400 Mhz and 500 Mhz machines. A series of model compounds including taurine, sodium isethionate, N-(2-ethyl sulfonate sodium salt) hexylamine, mono and di N-(2-ethyl sulfonate sodium salt) hexamethylenediamine, diester of sodium isethionate and adipic acid, hexylhexanoamide, and a mixture of hexylhexanoamide and N-(2-ethyl sulfonate sodium salt) hexylhexanoamide. The hydrogen and Carbon (13) spectra of these compounds was assigned using 2-D COSY, TOCSY, hmqc and hmqc- TOCSY NMR experiments that corolate neighboring atoms. This established the chemical shift of various hydrogen atoms. The spectra of modified nylon was confirmed based on these results. See "Two Dimensional NMR Spectroscopy - Applications for Chemists and Biochemists", 2nd edition, edited by W. R. Croasmun and R. M. K. Carlson, 1994 VCH Publishers, New York.

Matrix Assisted Laser Desorption/Ionization (MALDI) mass spectroscopy measures the molecular weight of polymers and especially oligmers. These measurements are precise to less than one atomic weight unit and are used to determine the number of repeat units and ends. N-substituted nylon can be detected by measuring the polymer molecular weight. In addition to nylon standard peaks, additional peaks represent the additional weight of N-substituents on the amide are present. See McEwen, C. N.; Jackson, C.; Larsen, B. S. "Instrumental Effects in the Analysis of Polymers of Wide Polydispersity by MALDI Mass Spectrometry" Int. J. Mass Spectrom. and Ion Processes, 160, (1997), 387-394; Bahr, U.; Deppe, A.; Karas, M.; Hillenkamp, F.; and Giessman, U., Anal. Chem., 64, (1992), 908.

### STAIN TEST METHODS

A solution of staining agent is prepared by dissolving 45 grams of cherry-flavored, sugar-sweetened "Kool-Aid" premix powder in 500 cc of water, and it is allowed to reach room temperature, i.e., 75°F (±5°) or 24°C (±3°), before using. This solution was used to test stain resistance of either nylon polymer granules (pass through 20 mesh screen), fibers, knitted textile tubes or carpet.

The test on nylon polymer granules and fibers was performed by placing 1 gm of powder in 20 ml of the "Kool-Aid" staining solution for 60 min. The nylon powder is separated from the staining solution by vacuum filtration followed by three rinsings with deionized water. The rating system is similar to that of the knitted textile tubes and carpet rating.

The following test procedure according to U.S. Patent No. 5,115,175, columns 4 and 5, was used to determine the stain-resistance performance of textile and carpet samples.

A specimen, approximately 1.5 in. x 3 in (3.8 x 7.6 cm) for carpet samples and approximately 2 in x 4 in (5.1 x 10.2 cm) for flattened knitted textile tubes, is cut from each sample and placed on a flat, non-absorbant surface and 20 cc (10 cc for textile samples) of the staining agent is poured onto each specimen through a cylinder to form a 1 to 2 inch (2.5 to 5.1 cm) circular stain. The cylinder is removed and the solution is worked into the fabric or carpet to achieve uniform staining. The samples are then lagged in the laboratory for twenty-four hours and then rinsed thoroughly with cool tap water and squeezed dry, using an extractor to remove excess solution.

The stain resistance of the specimen is determined visually according to the amount of color left on the stained area of the fabric. This is referred to as the stain rating, and is herein determined for samples that are dyed to a very light beige color according to the Stain Rating Scale (a copy of which is currently used by and available from the Flooring Systems Division of E. I. du Pont de Nemours and Company, Wilmington, DE 19898). These colors can be categorized according to the following standards:
5 = no staining
4 = slight staining
3 = moderate staining
2 = considerable staining
1 = heaving staining.
Carpets and fabrics that were dyed to deeper color shades were rated similarly on a scale of 1 to 5.

A stain-rating of 5 is excellent, showing good stain-resistance, whereas 1 is a poor rating, showing persistence of heavy staining. For a substrate to be considered to have adequate stain-resistance, it should have a rating of at least 4 on the above-described Stain Rating Scale.

### EXAMPLES

### EXAMPLE 1

Into a small autoclave set at 120°C was added 59.07 gms of 51.5% aqueous solution of hexamethylenediamine/adipic acid salt (nylon salt) and 2.93 gms of 25.6% aqueous vinylsulfonate sodium salt. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The presence of ethyl sulfonate on the nitrogen amide was confirmed by NMR. The polymer produced has a 18.2 RV, 93.9 amine end equivalent per million grams of polymer and 136.3 acid end equivalent per million grams of polymer. Granules (< 20 mesh) had a stain rating of 5.

### EXAMPLE 2

Into a medium size autoclave at room temperature, was added 68 pounds of 51.5% aqueous solution of hexamethylenediamine/adipic acid salt (nylon salt), 0.35 gms of Carbowax®, Dow Chemical, Midland, MI, anti foaming agent, 55 gms of hexamethylenediamine, and 1.90 pounds of 25.6% aqueous vinylsulfonate sodium salt. The autoclave was closed with a vent pressure at 250 psi and was heated to 240°C over a period of 240 min. Over the following period of 90 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The polymer produced has a 31.0 RV, 85.4 amine end equivalent per million grams of polymer and 82.3 acid end equivalent per million grams of polymer. Granules (<20 mesh) had a stain rating of 4.

### EXAMPLE 3

Into a medium size autoclave at room temperature, was added 68 pounds of 51.5% aqueous solution of hexamethylenediamine/adipic acid salt (nylon salt), 0.35 gms of Carbowax® anti foaming agent. 55 gms of hexamethylenediamine, and 3.79 pounds of 25.6% aqueous vinylsulfonate sodium salt. The autoclave was closed with a vent pressure at 250 psi and was heated to 240°C over a period of 240 min. Over the following period of 90 min.. the autoclave temperature was increased from 240°C to 275°C and the pressure was reduced to atmospheric pressure. The temperature was maintained at 275°C for an additional period of 60 min. The nylon polymer was removed from the autoclave and analyzed. The polymer produced has a 37.0 RV, 76.3 amine end equivalent per million grams of polymer and 77.2 acid end equivalent per million grams of polymer. Granules (<20 mesh) had a stain rating of 5.

### EXAMPLE 4

Into a small autoclave set at 120°C was added 59.07 gms of 51.5% aqueous solution of hexamethylenediamine/adipic acid salt (nylon salt) and 0.60 gms of styrenesulfonate sodium salt. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The presence of 2-(4-sulfo-phenyl)-ethane, on the nitrogen amide was confirmed by NMR. The polymer produced has a 42.9 RV, 48.6 amine end equivalent per million grams of polymer and 95.4 acid end equivalent per million grams of polymer. Granules (<20 mesh) had a stain rating of 5.

### EXAMPLE 5, not according to the invention

Into a small autoclave set at 120°C was added 59.07 gms of 51.5% aqueous solution of hexamethylenediamine/adipic acid salt (nylon salt) and 0.42 gms of sodium isethionate. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 40 min. The pressure of the autoclave was reduced to 250 mm Hg over a period of 10 min. and then maintained at this reduced pressure for an additional 40 min. The vacuum and heat were turned off and the nylon polymer was removed from the autoclave and analyzed. The polymer produced has a 44.4 RV, 48.1 amine end equivalent per million grams of polymer and 81.7 acid end equivalent per million grams of polymer. This polymer was spun into fiber and the fiber was stain tested and had a stain rating of 4.

### EXAMPLE 6

Into a small autoclave set at 120°C was added 59.07 gms of 51.5% aqueous solution of hexamethylenediamine/adipic acid salt (nylon salt) and 13.7 gms of 30.5% aqueous vinylsulfonate sodium salt. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The presence of ethyl sulfonate on the nitrogen amide was confirmed by NMR. The polymer produced has a 8.9 RV. The structure of the N-ethylsulfonate on a portion of the amide linkages in the nylon backbone was confirmed by NMR (3.8-4.0 ppm).

### EXAMPLE 7

Into a small autoclave set at 120°C was added 59.07 gms of 51.5% aqueous solution of hexamethylenediamine/adipic acid salt (nylon salt) and 1.82 gms of 30.5% aqueous vinylsulfonate sodium salt. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The presence of ethyl sulfonate on the nitrogen amide was confirmed by NMR. The polymer produced has a 16.8 RV, 96.8 amine end equivalent per million grams of polymer and 157.5 acid end equivalent per million grams of polymer. This sample was tested by MALDI to confirm the presence of sodium ethylsulfonate (molecular weight = 131). An additional set of MALDI peaks shifted by 131 appeared in the spectra. When the sodium MALDI counter ion was replaced by potassium a set of peaks representing a shift of 147 appeared (potassium ethylsulfonate molecular weight = 147).

### EXAMPLE 8

Into a small autoclave set at 120°C was added 59.07 gms of 51.5% aqueous solution of hexamethylenediamine/adipic acid salt (nylon salt) and 0.005 gms of vinylphosphinic acid. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The polymer produced has a 40.0 RV, 52.5 amine end equivalent per million grams of polymer and 89.7 acid end equivalent per million grams of polymer.

### EXAMPLE 9

Into a small autoclave set at 120°C was added 59.07 gms of 51.5% aqueous solution of hexamethylenediamine/adipic acid salt (nylon salt) and 0.015 gms ofvinylphosphinic acid. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The polymer produced has a 45.7 RV, 43.5 amine end equivalent per million grams of polymer and 86.6 acid end equivalent per million grams of polymer.

### EXAMPLE 10, not according to the invention

Into a small autoclave set at 120°C was added 59.07 gms of 51.5% aqueous solution of hexamethylenediamine/adipic acid salt (nylon salt) and 0.23 gms of 2-methyl-2-propene-1-sulfonic acid sodium salt. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The polymer produced has a 56.8 RV, 18.2 amine end equivalent per million grams of polymer and 88.5 acid end equivalent per million grams of polymer.

### EXAMPLE 11, not according to the invention

Into a small autoclave set at 120°C was added 59.07 gms of 51.5% aqueous solution of hexamethylenediamine/adipic acid salt (nylon salt) and 0.29 gms of methyl methacrylate. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analyzed. The polymer produced has a 43.0 RV, 40.9 amine end equivalent per million grams of polymer and 96.0 acid end equivalent per million grams of polymer.

### EXAMPLE 12

Into a small autoclave set at 120°C was added 59.07 gms of 51.5% aqueous solution of hexamethylenediamine/adipic acid salt (nylon salt), 0.15 gms of hexamethylenediamine and 0.10 gms of 4-vinylpyridine. The autoclave was equipped with a pressure relief valve set at 250 psi. The temperature of the autoclave was increased from 120°C to 240°C over a period of 100 min. Over the following period of 60 min., the autoclave temperature was increased from 240°C to 275°C and the pressure was reduced to atmospheric pressure. The temperature was maintained at 275°C for an additional period of 60 min. The nylon polymer was removed from the autoclave and analysed. The polymer produced has a 47.4 RV, 69.7 amine end equivalent per million grams of polymer and 95.6 acid end equivalent per million.

## Claims

1. A process comprising reacting an amine reactive modifier with a polyamide-precursor salt to form a diamine and then reacting the formed modified diamine with diacid, additional diamine and/or lactams, to form a modified polyamide, wherein the amine reactive modifier is selected from
nanofluoro-1-hexene
styrene
styrene sulfonate sodium salt,
methyl vinyl ketone,
vinylphosphonic acid,
vinyl sulfonate sodium salt, and
vinyl pyridine

2. The process Claim 1 wherein the amine reactive modifier is a vinyl sulfonate salt.

3. The process of Claim 1 wherein the amine reactive modifier is added at concentrations of 0.1% to 5% by weight.

4. The process of Claim 1 wherein the amine reactive modifier is added at concentrations of 0.5% to 3% by weight.

5. The process of Claim 1 wherein the polyamide polymer to be modified is selected from the group consisting of aliphatic polyamides, aromatic polyamides and aramids.

6. The process of Claim 5 wherein the aliphatic polyamide is nylon 6,6 or nylon 6.

7. The process of Claim 6 wherein the aliphatic polyamide is nylon 6,6 and the resulting product is a nylon composition having pendant vinyl sulfonate groups on 0.1 to 2 percent of the amide nitrogens.

## Patentansprüche

1. Verfahren umfassend die Reaktion eines aminreaktiven Modifizierers mit einem Polyamidvorläufersalz zur Bildung eines Diamins und danach die Reaktion des gebildeten, modifizierten Diamins mit zweiwertiger Säure, zusätzlichem Diamin und/oder Lactamen, um ein modifiziertes Polyamid zu bilden, wobei der aminreaktive Modifizierer ausgewählt ist aus
Nanofluor-1-Hexen
Styrol
Styrolsulfonatnatriumsalz,
Methylvinylketon,
Vinylphosphonsäure,
Vinylsulfonatnatriumsalz und
Vinylpyridin

2. Verfahren nach Anspruch 1, wobei der aminreaktive Modifizierer ein Vinylsulfonatsalz ist.

3. Verfahren nach Anspruch 1, wobei der aminreaktive Modifizierer in Konzentrationen von 0, 1 Gew.-% bis 5 Gew.-% hinzugefügt wird.

4. Verfahren nach Anspruch 1, wobei der aminreaktive Modifizierer in Konzentrationen von 0,5 Gew.-% bis 3 Gew.-% hinzugefügt wird.

5. Verfahren nach Anspruch 1, wobei das zu modifizierende Polyamidpolymer ausgewählt ist aus der Gruppe bestehend aus aliphatischen Polyamiden, aromatischen Polyamiden sowie Aramiden.

6. Verfahren nach Anspruch 5, wobei das aliphatische Polyamid Nylon 6,6 oder Nylon 6 ist.

7. Verfahren nach Anspruch 6, wobei das aliphatische Polyamid Nylon 6,6 und das resultierende Produkt eine Nylonzusammensetzung mit Vinalsulfonat-Seitengruppen von 0,1 bis 2 Prozent des Amidstickstoffes ist.

## Revendications

1. Procédé comprenant la réaction d'un modificateur réactif aux amines avec un sel précurseur de polyamide pour former une diamine, puis la réaction de ladite diamine modifiée formée avec un diacide, une diamine supplémentaire et/ou des lactames, afin de former un polyamide modifié, le modificateur réactif aux amines étant choisi parmi les composés suivants
nanofluoro-1-hexène
styrène
sulfonate de styrène, sel de sodium
méthylvinylcétone
acide vinylphosphonique
sulfonate de vinyle, sel de sodium, et
vinylpyridine.

2. Procédé de la revendication 1, dans lequel le modificateur réactif aux amines est un sel sulfonate de vinyle.

3. Procédé de la revendication 1, dans lequel le modificateur réactif aux amines est ajouté à des concentrations de 0,1 % à 5 % en poids.

4. Procédé de la revendication 1, dans lequel le modificateur réactif aux amines est ajouté à des concentrations de 0,5 % à 3 % en poids.

5. Procédé de la revendication 1, dans lequel le polymère polyamide à modifier est choisi dans l'ensemble constitué de polyamides aliphatiques, polyamides aromatiques et aramides.

6. Procédé de la revendication 5, dans lequel le polyamide aliphatique est le nylon 6,6 ou le nylon 6.

7. Procédé de la revendication 6, dans lequel le polyamide aliphatique est le nylon 6,6 et le produit obtenu est une composition de nylon ayant des groupes sulfonate de vinyle appendus sur 0,1 à 2 % des atomes d'azote des groupes amide.
